(19) **Europäisches Patentamt / European Patent Office / Office européen des brevets**

(11) **EP 4 475 046 B1**

(12) **EUROPEAN PATENT SPECIFICATION**

(45) Date of publication and mention of the grant of the patent:
**24.06.2026 Bulletin 2026/26**

(21) Application number: **22931065.1**

(22) Date of filing: **27.12.2022**

(51) International Patent Classification (IPC):
$G06N\ 20/20^{(2019.01)}$ $B23K\ 31/12^{(2006.01)}$
$B23K\ 9/04^{(2006.01)}$ $G06N\ 3/045^{(2023.01)}$
$G06N\ 3/08^{(2023.01)}$

(52) Cooperative Patent Classification (CPC):
**B23K 31/125; B23K 9/04; G06N 3/045; G06N 3/08; G06N 20/20**

(86) International application number:
**PCT/JP2022/048305**

(87) International publication number:
**WO 2023/171095 (14.09.2023 Gazette 2023/37)**

(54) **WELDING DEFECT PREDICTION SYSTEM, MACHINE LEARNING DEVICE, DEFECT PREDICTION METHOD, AND PROGRAM**

SCHWEISSDEFEKTVORHERSAGESYSTEM, MASCHINENLERNVORRICHTUNG, DEFEKTVORHERSAGEVERFAHREN UND PROGRAMM

SYSTÈME DE PRÉDICTION DE DÉFAUT DE SOUDAGE, DISPOSITIF D'APPRENTISSAGE AUTOMATIQUE, PROCÉDÉ DE PRÉDICTION DE DÉFAUT, ET PROGRAMME

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **09.03.2022 JP 2022036454**

(43) Date of publication of application:
**11.12.2024 Bulletin 2024/50**

(73) Proprietor: **KABUSHIKI KAISHA KOBE SEIKO SHO (KOBE STEEL, LTD.)**
**Hyogo 651-8585 (JP)**

(72) Inventors:
• **HUANG, Shuo**
  **Kobe-shi, Hyogo 651-2271 (JP)**
• **ASHIDA, Tsuyoshi**
  **Kobe-shi, Hyogo 651-2271 (JP)**

(74) Representative: **TBK**
**Bavariaring 4-6**
**80336 München (DE)**

(56) References cited:
**CN-A- 112 365 491** **CN-A- 112 365 491**
**JP-A- 2018 192 524** **JP-A- 2019 188 435**
**JP-A- 2020 008 992** **JP-A- 2021 079 444**
**JP-A- 2022 020 392**

• **P. STAVROPOULOS ET AL: "A three-stage quality diagnosis platform for laser-based manufacturing processes", THE INTERNATIONAL JOURNAL OF ADVANCED MANUFACTURING TECHNOLOGY, SPRINGER, LONDON, vol. 110, no. 11-12, 18 September 2020 (2020-09-18), pages 2991 - 3003, XP037256197, ISSN: 0268-3768, [retrieved on 20200918], DOI: 10.1007/S00170-020-05981-9**

## Description

The present invention relates to a defect prediction system for welding, a machine learning device, a defect prediction method, and a program, see claims 1, 2, 3 and 4.

## BACKGROUND ART

In the related art, in a welding system, a quality thereof is determined during welding, and a determination result thereof is utilized for welding quality evaluation for quality control, warning control, control for improving a welding work, and the like. Of course, the higher an accuracy, the better the determination. In recent years, a technique has been developed in which a learning device is applied to predict a welding result in real time during welding.

A prediction technique using a learning device in the related art is disclosed in, for example, JP 2020-060462 A. JP 2020-060462 A discloses a configuration in which a probability of the presence or absence of a defect is estimated by using an estimation model after machine learning using an image as input for a welded structure, and an image of the structure is output according to the estimated value.

Furthermore, JP 2022-020392 A (describing the preamble of claims 1, 2 3, and 4) shows a defect occurrence prediction method and device, wherein defect information on a shaped article is obtained by searching a database, and the defect information is presented. When a mathematical model is generated, input subitems in the input information are each associated with the individual defect information through the mathematical model.

Furthermore, the article "A three-stage quality diagnosis platform for laser-based manufacturing processes", from 'The international Journal of advanced manufacturing technology' (Springer, vol. 110, no. 11-12 of Sep. 18, 2020) by P. Stavropoulos et. al. refers to a web-based quality diagnosis platform using a 3SQA algorithm (3-Stage Quality Assessment), which is based on Stage I: Features Extraction, Stage II: Decision per frame, and Stage III: Decision per stich or part.

Moreover, CN 112 365 491 A shows a container weld joint detection method, wherein a model is obtained by training a training set based on a preset training model, a training sample in the training set comprises annotation information, and annotation information comprises a positioning frame used for representing weld joint defects, size information of the positioning frame, position information of the positioning frame and defect types of the weld joint defects.

## SUMMARY OF INVENTION

## TECHNICAL PROBLEM

For example, in a case of welding wire additive manufacturing in which a multilayer manufactured object is built by depositing weld beads formed by melting and solidifying a filler metal, a defect such as a cavity occurs inside the manufactured object after the building depending on a shape or arrangement of the weld beads. In addition, when welding conditions or building are inappropriate, a narrow portion is generated between the beads. When the building is continued in the state in which the narrow portion is generated, a melting failure may occur. For the quality control, it is important to detect or predict a melting failure or a welding defect. On the other hand, there are many factors affecting the occurrence of the melting failure or the welding defect, and thus it is difficult to detect or predict a welding defect based on a mechanism. This may occur not only in additive manufacturing but also in normal welding.

In view of the above-described problems, an object of the present invention is to provide a defect prediction system, a machine learning device, a defect prediction method, and a program capable of predicting a defect related to welding with higher accuracy.

## SOLUTION TO PROBLEM

In order to solve the above-described problems, the present invention provides a defect prediction system according to claim 1, a machine learning device according to claim 2, a defect prediction method according to claim 3, and a program according to claim 4.

## ADVANTAGEOUS EFFECTS OF INVENTION

According to the present invention, it is possible to predict a defect related to welding with higher accuracy.

## BRIEF DESCRIPTION OF DRAWINGS

FIG. 1 is a block diagram illustrating a configuration example of a defect prediction system according to an embodiment of the present invention.
FIG. 2 is a block diagram illustrating an example of a functional configuration of the defect prediction system according to the embodiment of the present invention.
FIG. 3 is a graph illustrating an example of a defect prediction method according to an embodiment of the present invention.
FIG. 4 is a schematic diagram illustrating an example of the defect prediction method according to the embodiment of the present invention.
FIG. 5 is a flowchart of a prediction processing in the defect prediction system according to the embodiment of the present invention.

FIG. 6 is a graph illustrating prediction results of the defect prediction method according to the embodiment of the present invention.

FIG. 7 is a graph illustrating prediction results of the defect prediction method according to the embodiment of the present invention.

FIG. 8 is a graph illustrating prediction results of the defect prediction method according to the embodiment of the present invention.

DESCRIPTION OF EMBODIMENTS

Hereinafter, embodiments of the present invention will be described with reference to the drawings. An embodiment to be described later is an embodiment for describing the present invention, and is not intended to be interpreted to limit the present invention, which is limited according to the scope of protection conferred by the appended claims. In the drawings, the same components are denoted by the same reference numerals, and a correspondence therebetween is shown.

In the following description, "learning" or "machine learning" refers to generating a "trained model" by performing learning using learning data and any learning algorithm. The trained model is updated at an appropriate time as the learning proceeds using a plurality of pieces of learning data, and the output changes even for the same input. Therefore, the trained model is not limited to a state at any time point. Here, a model used in learning is referred to as a "learning model", and the learning model in which a certain degree of learning has been performed is referred to as a "trained model". A specific example of the "learning data" will be described later, and the configuration may be changed according to a learning algorithm to be used. In addition, the learning data may include training data used for learning, verification data used for verifying a trained model, and test data used for testing a trained model. In the following description, data related to learning is collectively referred to as "learning data", and data used for learning is referred to as "training data". It is not intended to clearly classify the training data, the verification data, and the test data included in the learning data, and for example, according to learning, verification, and test methods, all the learning data may be the training data.

<First Embodiment>

Hereinafter, an embodiment according to the present invention will be described with reference to the drawings.

[Configuration of Defect Prediction System]

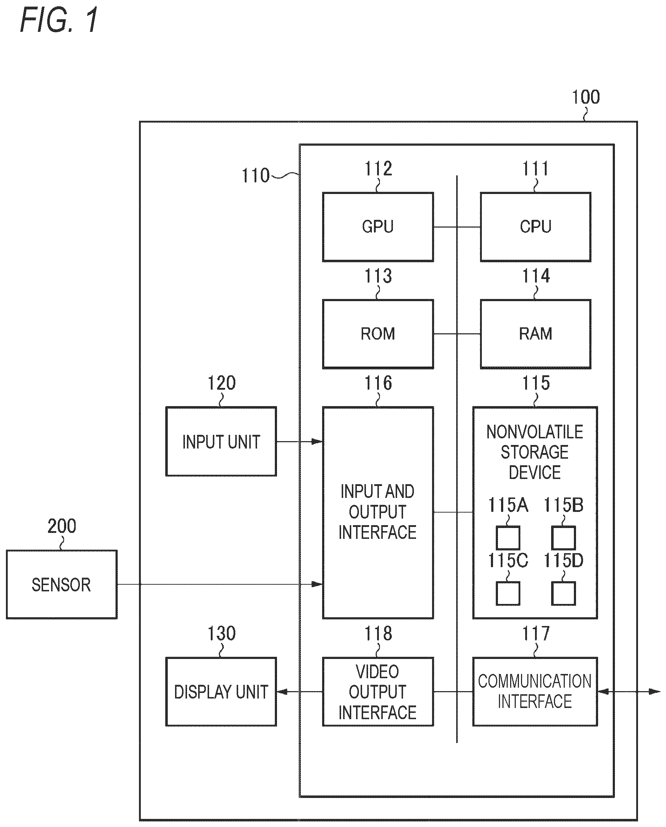

FIG. 1 is a diagram illustrating a configuration example of a defect prediction system 100 capable of implementing a defect prediction method in welding according to the present embodiment. The defect prediction system 100 is implemented by, for example, an information processing device. Although not illustrated in FIG. 1, the defect prediction system 100 may be connected to a welding system including a welding robot or the like that performs welding, and may predict a defect that occurs with the welding in conjunction with the welding system.

The defect prediction system 100 includes a main body 110, an input unit 120, and a display unit 130. The main body 110 includes a central processing unit (CPU) 111, a graphics processing unit (GPU) 112, a ROM 113, a RAM 114, a nonvolatile storage device 115, an input and output interface 116, a communication interface 117, and a video output interface 118. The CPU 111, the GPU 112, the ROM 113, the RAM 114, the nonvolatile storage device 115, the input and output interface 116, the communication interface 117, and the video output interface 118 are communicably connected to each other via a bus or a signal line.

The nonvolatile storage device 115 stores a learning program 115A that executes a learning processing using learning data and a predetermined learning algorithm, a trained model 115B generated by executing the learning program 115A, a prediction program 115C that predicts a defect using the trained model 115B, and learning data 115D. In addition, an operating system or an application program may be installed in the nonvolatile storage device 115.

The defect prediction system 100 implements various functions by the CPU 111 and the GPU 112 executing programs. In the case of the present embodiment, the defect prediction system 100 implements a function of generating a trained model by machine learning and a function of performing an actual defect prediction processing using the trained model. The contents of these functions will be described later.

In the present embodiment, an example in which a device that performs a learning processing to generate a trained model and a device that performs prediction using the trained model are integrated will be described, and the present invention is not limited to this configuration. That is, the device that performs a learning processing and the device that performs prediction may be separate devices. From the viewpoint of versatility, it is more preferable to separate the defect prediction system 100 according to each function.

The CPU 111 and the GPU 112 are used as arithmetic devices when executing the learning program 115A, the trained model 115B, and the prediction program 115C. The ROM 113 stores a basic input output system (BIOS) or the like executed by the CPU 111. The RAM 114 is used as a work area of the program read from the nonvolatile storage device 115.

The input and output interface 116 is connected to the input unit 120 including a keyboard, a mouse, and the like. A sensor 200 is also connected to the input and output interface 116. Various data output from the sensor 200 is provided to the CPU 111 or the GPU 112 via the input and output interface 116. The sensor 200 may be moved according to, for example, the driving of a welding robot (not illustrated) and acquire information on a weld bead or a peripheral shape thereof. As the sensor 200, for example, a laser sensor that acquires reflected light of emitted laser light as height data, and a camera for three-dimensional shape measurement may be used. A plurality of types of sensors may be provided as the sensor 200.

The communication interface 117 is a communication module for wired or wireless communication. A communication method used for the communication interface 117 is not limited to one, and a plurality of communication methods may be connected in combination. The communication interface 117 may be connected to acquire various parameters related to welding by communicating with the welding system, for example. The video output interface 118 is connected to the display unit 130 including, for example, a liquid crystal display or an organic electro-luminescence (EL) display, and outputs to the display unit 130 a video signal corresponding to video data supplied from the CPU 111.

The welding system capable of cooperating with the defect prediction system 100 may include, for example, a welding robot, and a welding power supply unit that provides electric power related to welding. The welding robot is an articulated robot, and a welding torch is attached to a tip end shaft thereof. A filler metal (welding wire) to be continuously supplied is supported at a tip end of the welding torch, and welding is performed according to a desired shape. When the defect prediction system 100 and the welding system are integrated, control units thereof may also be integrated.

[Trained Model]

First, the generation of the trained model according to the present embodiment will be described. The trained model is generated by executing a learning program. In the present embodiment, two trained models are used. Therefore, in the present embodiment, the two trained models are generated using learning models based on two different learning algorithms. In the present embodiment, learning data used as an input is common to all learning models. The terms "first" and "second" described in the present specification are merely used to be distinguished from other elements for convenience, and are not necessarily intended to be interpreted as being limited to specific elements.

For convenience, the two learning models according to the present embodiment are referred to as a "first learning model" and a "second learning model" In addition, the two trained models corresponding thereto are referred to as a "first trained model" and a "second trained model" In the present embodiment, the first learning model and the first trained model use a learning algorithm that outputs discrete values. More specifically, a well-known random forest will be described as an example. The second learning model and the second trained model use a learning algorithm that outputs continuous values. More specifically, a well-known Gaussian process regression will be described as an example. The learning algorithm used here is merely an example, and different types and combinations of algorithms may be used.

Parameters related to welding (hereinafter also referred to as "welding parameters") are used for the input to the first learning model and the first trained model. More specifically, image data acquired when the sensor 200 is implemented as a camera may be included. The image data may be used, or for example, a depth, a width (short length), a length (long length), and a target position deviation amount of a narrow portion may be extracted from the image data and used. In addition, point cloud data acquired when the sensor 200 is implemented as a laser sensor may be included. In addition, a welding current, a welding voltage, a bead-to-bead distance, a travel speed, and the like may be used as welding parameters. In addition, a feeding speed of the filler metal, an inclination angle of the welding torch, and the like may be used.

The same data as described above may be used in the second learning model and the second trained model. The first learning model and the first trained model, and the second learning model and the second trained model may perform different preprocessing before input even when the same data is used.

The outputs of the first learning model and the first trained model are discrete values, and may be, for example, a plurality of classifications. More specifically, for example, the output may indicate which of the four classifications the input belongs to The number of classifications is not particularly limited, and two or more classifications may be used.

The outputs of the second learning model and the second trained model are continuous values, and may be, for example, a defect size indicated in a predetermined unit.

[Functional Configuration]

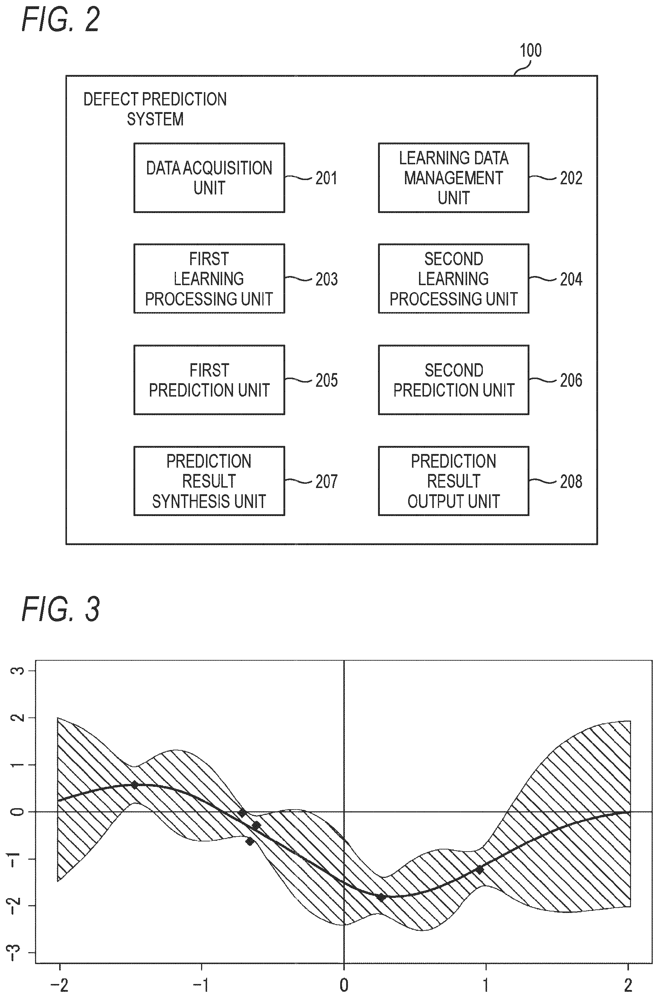

FIG. 2 is a diagram illustrating an example of a functional configuration of the defect prediction system 100 according to the present embodiment. Each unit may be implemented by the CPU 111 or the GPU 112 reading and executing various data or programs stored in the nonvolatile storage device 115. As described above, the nonvolatile storage device 115 includes the programs in which a plurality of learning models based on a plurality of types of learning algorithms are defined, and learning is performed using the programs.

A data acquisition unit 201 acquires various data. The data acquired here includes data required for an actual defect prediction processing and learning data used for a learning processing. A learning data management unit 202 holds and manages learning data used for a learning processing.

A first learning processing unit 203 generates the first trained model using the learning data and the first learning model. The first learning processing unit 203 manages the generated first trained model. The first trained model may be managed for each version as history information, or only the latest version may be managed.

A second learning processing unit 204 generates the second trained model using the learning data and the second learning model. The second learning processing unit 204 manages the generated second trained model. The second trained model may be managed for each version as history information, or only the latest version may be managed.

A first prediction unit 205 applies the first trained model generated by the first learning processing unit 203 to various input parameters and outputs a prediction result. Before various parameters are input to the first trained model, the first prediction unit 205 may perform preprocessing according to an input format. A degree of training of the first trained model used here is not particularly limited, and the first trained model that has been trained to a state in which a certain level of accuracy is obtained may be used.

A second prediction unit 206 applies the second trained model generated by the second learning processing unit 204 to various input parameters and outputs a prediction result. Before various parameters are input to the second trained model, the second prediction unit 206 may perform preprocessing according to an input format. A degree of training of the second trained model used here is not particularly limited, and the second trained model that has been trained to a state in which a certain level of accuracy is obtained may be used.

A prediction result synthesis unit 207 performs a synthesis processing based on the prediction result of the first prediction unit 205 and the second prediction result. A prediction result output unit 208 outputs a result predicted by the prediction result synthesis unit 207 in a predetermined format. The output format may be a format in which the result is displayed on a screen for a user, or a format in which the result is fed back to the welding system as control parameters for welding.

[Learning Algorithm]

As described above, in the present embodiment, the plurality of types of learning algorithms are used. In the present embodiment, a learning algorithm that outputs continuous values and a learning algorithm that outputs discrete values are used for inputs, and an example thereof will be described.

(Example of Learning Algorithm Handling Continuous Values)

FIG. 3 is a graph illustrating a Gaussian process regression, which is a type of the learning algorithm used in the present embodiment. The Gaussian process regression is a probability model that handles continuous values having non-linearity. In the algorithm of Gaussian process regression, inputs (corresponding to six black points in the example of FIG. 3) are fitted with a curve. Further, uncertainty is used for values other than the inputs as indicated by oblique lines. The Gaussian process regression is a well-known algorithm, and thus the detailed description thereof is omitted here. In the present embodiment, the inputs are used as the welding parameters, and predicted values (continuous values) for the output are derived. More specifically, parameters indicating a defect size are output as predicted values for the input. Here, the parameters indicating a defect size will be described as two parameters $(x, y)$ indicated in two dimensions. However, the present invention is not limited thereto, and three parameters $(x, y, z)$ may be output when the defect size is indicated in three dimensions.

(Example of Learning algorithm Handling Discrete Values)

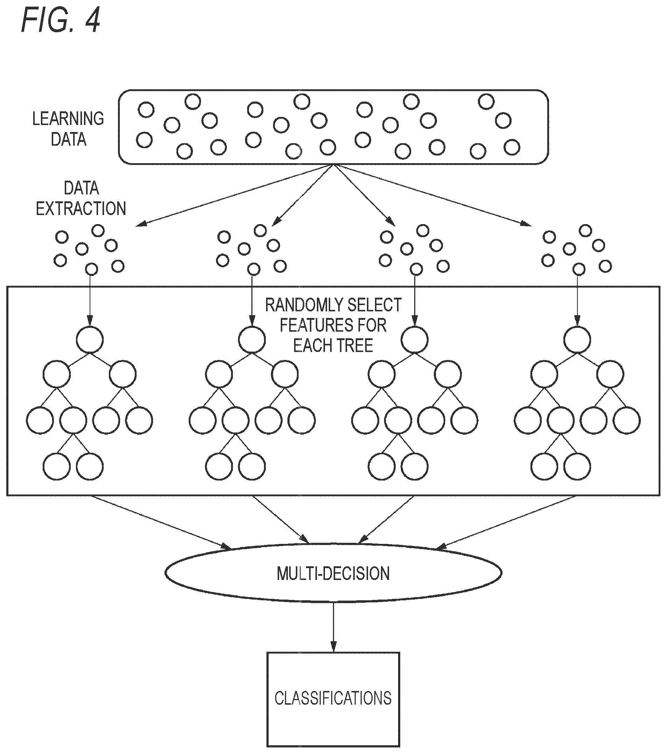

FIG. 4 is a schematic diagram illustrating a random forest, which is a type of the learning algorithm used in the present embodiment. In the random forest, a plurality of data groups are set by extracting some data from the learning data. Then, a decision tree of a tree structure is generated while randomly selecting features using each data group. Further, results based on the decision tree are integrated by multi-decision to construct a trained model. In the present embodiment, the classifications are targeted, and multi-decision is used at the time of integration. The random forest is a well-known algorithm, and thus the detailed description thereof is omitted here. In the present embodiment, the inputs are used as the welding parameters, and the classifications (discrete values) for the output are derived. More specifically, as a classification for an input, one of a plurality of classifications defined in accordance with the defect size is output. In the present embodiment, four classifications of "no defect (0)", "small defect (1)", "medium defect (2)", and "large defect (3)" will be described.

[Overview of Control]

The processing according to the present embodiment is roughly divided into two phases, that is, a learning phase and a defect prediction phase. The learning phase is a phase in which a trained model is generated, and the defect prediction phase is a phase in which an actual prediction processing is performed using the trained model generated in the learning phase. Processing in each phase is implemented by the CPU 111 or the GPU 112 of the defect prediction system 100 reading and executing various programs stored in the nonvolatile storage device 115 or the like.

In the learning phase, a plurality of trained models having a certain level of accuracy are generated by repeatedly performing a learning processing, a verification operation, and the like using the above-described various learning data. The plurality of trained models are generated before a control phase is performed, and the latest trained model at that time is used in the control phase. After the control phase is performed, the learning phase may also be repeated as necessary, and does not limit at which time the trained model is used.

As described above, in the present embodiment, in the learning phase, learning using a learning algorithm that handles discrete values and learning using a learning algorithm that handles continuous values are performed. The degree of each learning is not particularly limited, and may be set in consideration of properties or a processing load of each learning algorithm.

In the defect prediction phase, the defect prediction system 100 performs a prediction processing using the plurality of trained models. In the present embodiment, the defect prediction system 100 performs both learning (generation of the plurality of trained models) and defect prediction.

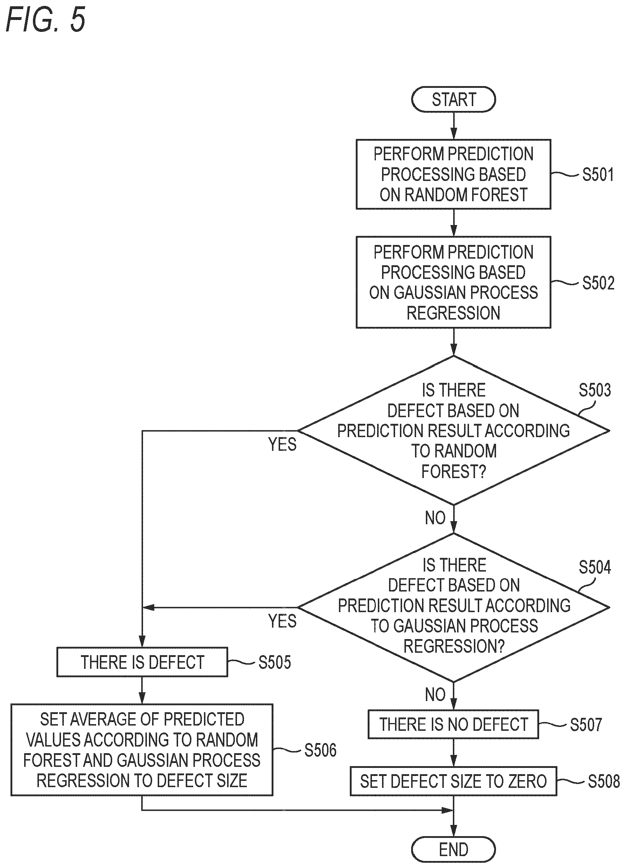

FIG. 5 is a flowchart of a defect prediction processing by the defect prediction system 100 according to the present embodiment. In the present embodiment, the two trained models are already generated and available.

In S501, the defect prediction system 100 acquires a prediction result by inputting welding parameters into the first trained model, that is, a trained model based on a random forest. As described above, as the prediction result, any one of the four classifications is obtained for the welding parameters.

In S502, the defect prediction system 100 acquires a prediction result by inputting welding parameters to the second trained model, that is, a trained model based on a Gaussian process regression. As described above, as the prediction result, the parameters indicating a defect size are obtained for the welding parameters. In the present embodiment, parameters $(x_a, y_a)$ are acquired to indicate a defect size in two dimensions.

In S503, the defect prediction system 100 determines whether there is a defect based on the prediction result in S501. In the case of the present embodiment, when any one of "small defect (1)", "medium defect (2)", and "large defect (3)" among the four classifications is predicted, it is determined that there is a defect. When it is determined that there is a defect (YES in S503), the process of the defect prediction system 100 proceeds to S505. On the other hand, when it is determined that there is no defect (NO in S503), the process of the defect prediction system 100 proceeds to S504.

In S504, the defect prediction system 100 determines whether there is a defect based on the prediction result in S502. In the case of the present embodiment, a threshold value for the prediction result (continuous values) is set, and it is determined that there is a defect when the prediction result exceeds the threshold value. The threshold value may be set by the user, or may be defined according to a shape, specification, or the like of the manufactured object. For example, the threshold value may be set to 0.5 mm. When it is determined that there is a defect (YES in S504), the process of the defect prediction system 100 proceeds to S505. On the other hand, when it is determined that there is no defect (NO in S504), the process of the defect prediction system 100 proceeds to S507.

In S505, the defect prediction system 100 determines that there is a defect based on the prediction results of the two trained models. Thereafter, the process of the defect prediction system 100 proceeds to S506.

In S506, the defect prediction system 100 synthesizes the prediction results of the two trained models to set the defect size. In the present embodiment, the parameters indicating a defect size are defined for each of the four classifications used in the first trained model. For example, two parameters $(x, y)$ are defined in advance when the defect size is indicated in two dimensions, and three parameters $(x, y, z)$ are defined when the defect size is indicated in three dimensions.

For example, in the case of four classifications, the following setting may be performed.

> "no defect (0)" = (0, 0)
> "small defect (1)" = $(x_{p1}, y_{b1})$
> "medium defect (2)" = $(x_{b2}, y_{b2})$
> "large defect (3)" = $(x_{b3}, y_{b3})$

$$x_{b1} < x_{b2} < x_{b3}, y_{b1} < y_{b2} < y_{b3}.$$

The set values may be set based on the shape or specification of the manufactured object, a relation with the trained model that handles continuous values, and the like. That is, the parameters (here, classifications) to be output as the discrete values are defined as information to be converted, assuming synthesis with parameters to be output as continuous values by using another learning algorithm. The information to be converted may be defined in a table format.

In the present embodiment, the defect size is set using the parameters corresponding to the above-described classifications and an average value of the prediction results obtained in S502.

$$\text{Defect size } (x) = (x_a + x_b)/2$$

$$\text{Defect size } (y) = (y_a + y_b)/2$$

Then, this processing flow ends.

In S507, the defect prediction system 100 determines that there is no defect based on the prediction results of the two trained models. Thereafter, the process of the defect prediction system 100 proceeds to S508.

In S508, the defect prediction system 100 sets the defect size to zero based on the prediction results of the two trained models.

$$\text{Defect size (x)} = 0$$

$$\text{Defect size (y)} = 0$$

Then, this processing flow ends.

[Prediction Result]

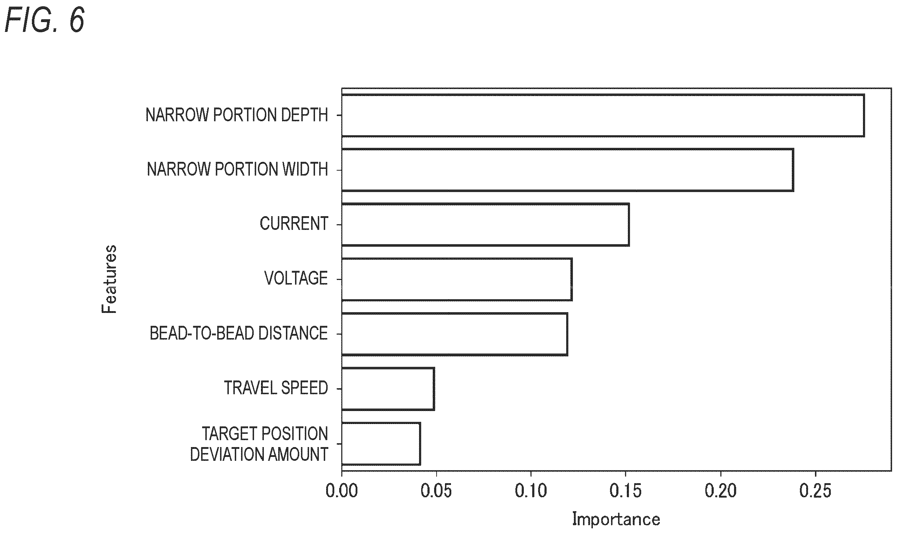

The prediction results by using the defect prediction method according to the present embodiment will be described with reference to FIGS. 6 to 8.

FIG. 6 is a diagram illustrating a relation between an importance and features when a random forest is used as the first learning model that handles discrete values. Here, in K cross validation which is a well-known evaluation method, a result in which an accuracy rate of 78% is obtained for the classifications is shown. In FIG. 6, a horizontal axis indicates the importance, and a vertical axis indicates the features. It can be seen that a narrow portion depth, a narrow portion width, a current, a voltage, a bead-to-bead distance, a travel speed, a target position deviation amount, and the like as the features obtained based on the input affect the detection of a defect.

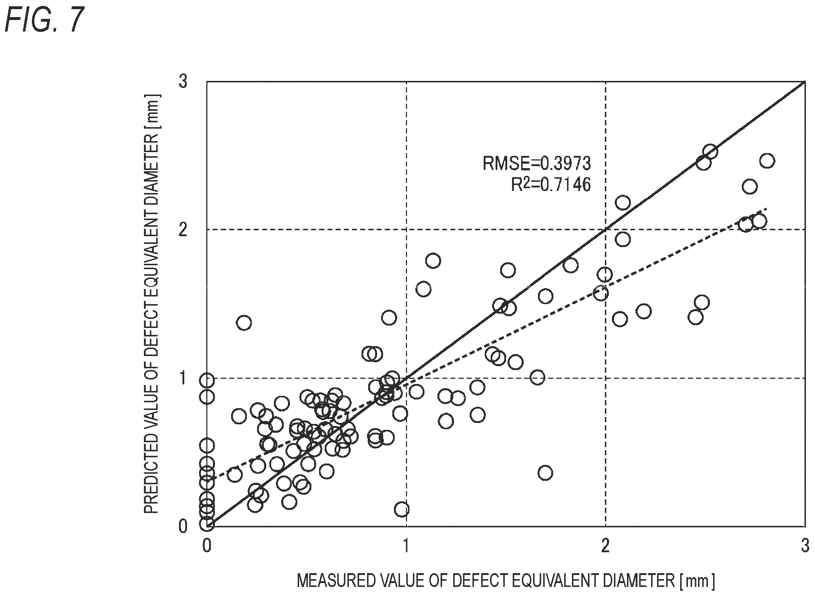

FIG. 7 illustrates prediction results when a Gaussian process regression is used as the second learning model that handles continuous values. In FIG. 7, a horizontal axis indicates a measured value [mm] of a diameter of a defect, and a vertical axis indicates a predicted value [mm] of the defect. In the case of the prediction result, the following accuracy is obtained.

RMSE (Root Mean Squared Error) = 0.3973
$R^2$ (variance) = 0.7146

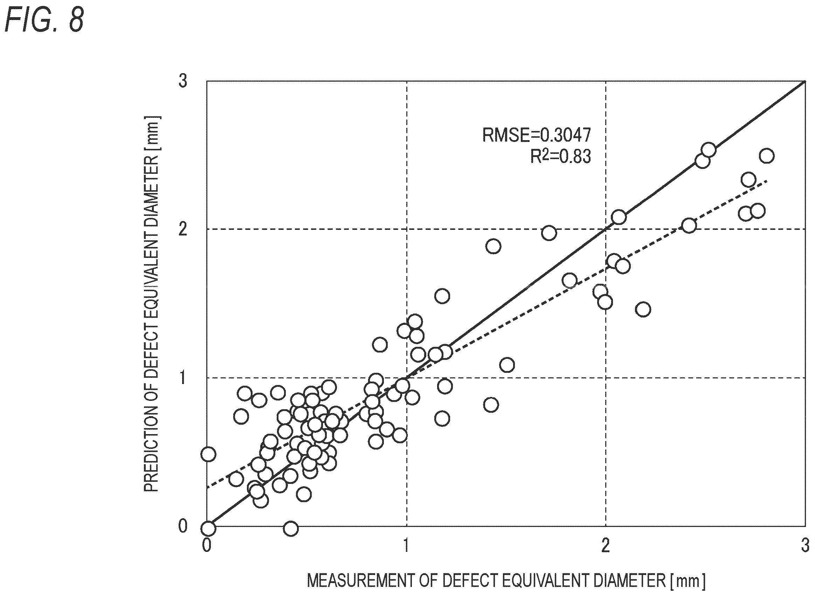

FIG. 8 illustrates prediction results when the defect prediction processing illustrated in FIG. 5 is performed using the first trained model having the accuracy illustrated in FIG. 6 and the second trained model having the accuracy illustrated in FIG. 7. In FIG. 8, a horizontal axis indicates a measured value [mm] of the diameter of the defect, and a vertical axis indicates a predicted value [mm] of the defect. In the case of the prediction result, the following accuracy is obtained.

RMSE = 0.3047
$R^2$ = 0.83

That is, the defect prediction method according to the present embodiment in which the first trained model and the second trained model are used in combination can obtain higher accuracy than when the first trained model and the second trained model are used alone. In addition, the variance also decreases, and thus the occurrence of errors can be reduced.

As described above, according to the present embodiment, it is possible to predict a defect related to welding with higher accuracy

<Other Embodiments>

In the above-described embodiment, when the prediction results of the first trained model and the second trained model are synthesized, a simple average is used. However, the present invention is not limited to this configuration, and predicted values may be integrated by weighting each prediction result according to properties, accuracy, or the like of learning algorithms to be combined.

When the prediction results of the first trained model and the second trained model are synthesized, a maximum value may be selected from a plurality of predicted values and set as a prediction result. For example, when welding with higher accuracy is required, a welding quality can be improved by setting the prediction result on a safer side.

When the prediction results of the first trained model and the second trained model are synthesized, a minimum value may be selected from the plurality of predicted values and set as a prediction result. For example, when a travel speed or the like is obtained in preference to the accuracy, it is possible to reduce excessive detection for a defect by setting the prediction result so that the defect size becomes small.

When the prediction results of the first trained model and the second trained model are synthesized, a plurality of synthesis methods may be combined. For example, depending on a difference between a plurality of prediction results, it may be possible to switch between the average value, the maximum value, and the minimum value to be used for setting a predicted value.

In addition, when a difference between the plurality of prediction results exceeds a predetermined threshold value or when one prediction result indicates an extreme value, it is assumed that there is an error in any one prediction result, and a predicted value thereof may be ignored.

Although two types of learning algorithms that handle discrete values and continuous values respectively are used in the above-described embodiments, three or more types of learning algorithms may be combined. In addition, a defect may be predicted using a plurality of learning algorithms that handle discrete values, so long as the learning algorithms are different. Similarly, a defect may be predicted using a plurality of learning algorithms that handle continuous values.

In the above-described embodiments, the configuration is illustrated in which the learning algorithm that handles discrete values and the learning algorithm that handles continuous values are combined, and when the outputs of these are synthesized, the discrete values (classifications) are converted into the continuous values to perform synthesis. However, the present invention is not limited to this configuration, and the defect size may be predicted by converting the continuous values into the discrete values.

The welding system may adjust the welding parameters based on the defect size obtained by the defect prediction according to the present embodiment. A degree of adjustment here is not particularly limited, and for example, the welding parameters may be adjusted according to an appearance frequency, an appearance position, an appearance timing, and the like of a defect of a certain size.

In the present invention, a program or an application for implementing the functions of the one or more embodiments described above may be supplied to a system or an apparatus using a network, a storage medium, or the like, and one or more processors in a computer of the system or the apparatus may read and execute the program.

Alternatively, one or more functions may be implemented by a circuit. Examples of the circuit that implements one or more functions include an application specific integrated circuit (ASIC) and a field programmable gate array (FPGA).

The present application is based on Japanese Patent Application No. 2022-036454 filed on March 9, 2022.

REFERENCE SIGNS LIST

100: defect prediction system

110: main body

111: CPU

112: GPU

113: ROM

114: RAM

115: nonvolatile storage device

116: input and output interface

117: communication interface

118: video output interface

120: input unit

130: display unit

200: sensor

201: data acquisition unit

202: learning data management unit

203: first learning processing unit

204: second learning processing unit

205: first prediction unit

206: second prediction unit

207: prediction result synthesis unit

208: prediction result output unit

**Claims**

1. A defect prediction system (100) for predicting a defect occurring in welding, the defect prediction system (100) comprising:

   a first prediction unit (205) configured to predict the defect using a first trained model that receives a welding parameter and outputs a parameter indicating a size of the defect;
   the system (100) being **characterised by**:

   a second prediction unit (206) configured to predict the defect using a second trained model that receives the welding parameter and outputs a parameter indicating a size of the defect; and
   a third prediction unit configured to predict the size of the defect based on a parameter predicted by the first prediction unit (205) and a parameter predicted by the second prediction unit (206),
   and further **characterised in that**:

   the first trained model is generated using a first learning algorithm that outputs discrete values;
   the second trained model is generated using a second learning algorithm that outputs continuous values;
   the discrete value output from the first trained model is one of a plurality of classifications; and
   the third prediction unit converts a classification, which is the parameter predicted by the first prediction unit (205), into a value indicating a size of a defect defined in advance for the classification, and synthesizes the converted value with the parameter predicted by the second prediction unit (206).

2. A machine learning device for generating a trained model for predicting a defect occurring in welding, the machine learning device comprising:

a first learning processing unit (203) configured to use a welding parameter as learning data and perform a learning processing according to a first learning algorithm that outputs discrete values, thereby generating a first trained model that uses the welding parameter as input data and outputs a parameter indicating a size of a defect caused by the welding parameter; the device being **characterised by**

a second learning processing unit (204) configured to use the welding parameter as learning data and perform a learning processing according to a second learning algorithm that outputs continuous values, thereby generating a second trained model that uses the welding parameter as input data and outputs a parameter indicating the size of the defect caused by the welding parameter, wherein the parameter output from the first trained model and the parameter output from the second trained model are convertible into any one of parameter formats, wherein:

the discrete value output from the first trained model is one of a plurality of classifications; and a classification, which is the parameter predicted by the first prediction unit, is converted into a value indicating a size of a defect defined in advance for the classification, and synthesizes the converted value with the parameter predicted by the second prediction unit.

3. A defect prediction method for predicting a defect occurring in welding, the defect prediction method comprising:

a first prediction step of predicting the defect using a first trained model that receives a welding parameter and outputs a parameter indicating a size of the defect; the method being **characterised by**:

a second prediction step of predicting the defect using a second trained model that receives the welding parameter and outputs a parameter indicating a size of the defect; and a third prediction step of predicting the size of the defect based on a parameter predicted in the first prediction step and a parameter predicted in the second prediction step,

and further **characterised in that**:

the first trained model is generated using a first learning algorithm that outputs discrete values; the second trained model is generated using a second learning algorithm that outputs continuous values; the discrete value output from the first trained model is one of a plurality of classifications; and the third prediction step converts a classification, which is the parameter predicted by the first prediction step, into a value indicating a size of a defect defined in advance for the classification, and synthesizes the converted value with the parameter predicted by the second prediction step.

4. A program causing a computer to execute:

a first prediction step of predicting a defect occurring in welding using a first trained model that receives a welding parameter and outputs a parameter indicating a size of the defect; the program being **characterised by**:

a second prediction step of predicting the defect using a second trained model that receives the welding parameter and outputs a parameter indicating a size of the defect; and a third prediction step of predicting the size of the defect based on a parameter predicted in the first prediction step and a parameter predicted in the second prediction step, **characterized in that**:

the first trained model is generated using a first learning algorithm that outputs discrete values; the second trained model is generated using a second learning algorithm that outputs continuous values; the discrete value output from the first trained model is one of a plurality of classifications; and the third prediction step converts a classification, which is the parameter predicted by the first prediction step, into a value indicating a size of a defect defined in advance for the classification, and synthesizes the converted value with the parameter predicted by the second prediction step.

**Patentansprüche**

1. Fehlervorhersagesystem (100) zur Vorhersage eines beim Schweißen auftretenden Fehlers, wobei das Fehlervorhersagesystem (100) Folgendes umfasst:

    eine erste Vorhersageeinheit (205), die konfiguriert ist, um den Fehler unter Verwendung eines ersten trainierten Modells vorherzusagen, das einen Schweißparameter empfängt und einen Parameter ausgibt, der eine Größe des Fehlers angibt;
    wobei das System (100) durch Folgendes gekennzeichnet ist:

    eine zweite Vorhersageeinheit (206), die konfiguriert ist, um den Fehler unter Verwendung eines zweiten trainierten Modells vorherzusagen, das den Schweißparameter empfängt und einen Parameter ausgibt, der eine Größe des Fehlers angibt;
    eine dritte Vorhersageeinheit, die konfiguriert ist, um die Größe des Fehlers auf einer Grundlage eines von der ersten Vorhersageeinheit (205) vorhergesagten Parameters und eines von der zweiten Vorhersageeinheit (206) vorhergesagten Parameters vorherzusagen,
    und ferner **dadurch gekennzeichnet ist, dass**
    das erste trainierte Modell unter Verwendung eines ersten Lernalgorithmus erzeugt wird, der diskrete Werte ausgibt;
    das zweite trainierte Modell unter Verwendung eines zweiten Lernalgorithmus erzeugt wird, der kontinuierliche Werte ausgibt;
    der vom ersten trainierten Modell ausgegebene diskrete Wert eine einer Vielzahl von Klassifizierungen ist; und
    die dritte Vorhersageeinheit eine Klassifizierung, die der von der ersten Vorhersageeinheit (205) vorhergesagte Parameter ist, in einen Wert umwandelt, der eine für die Klassifizierung im Voraus definierte Größe eines Fehlers angibt, und den umgewandelten Wert mit dem von der zweiten Vorhersageeinheit (206) vorhergesagten Parameter kombiniert.

2. Maschinelle Lernvorrichtung zum Erzeugen eines trainierten Modells zur Vorhersage eines beim Schweißen auftretenden Fehlers, wobei die maschinelle Lernvorrichtung Folgendes umfasst:

    eine erste Lernverarbeitungseinheit (203), die konfiguriert ist, um einen Schweißparameter als Lerndaten zu verwenden und eine Lernverarbeitung gemäß einem ersten Lernalgorithmus durchzuführen, der diskrete Werte ausgibt, wodurch ein erstes trainiertes Modell erzeugt wird, das den Schweißparameter als Eingabedaten verwendet und einen Parameter ausgibt, der eine Größe eines durch den Schweißparameter verursachten Fehlers angibt;
    wobei die Vorrichtung durch Folgendes gekennzeichnet ist:

    eine zweite Lernverarbeitungseinheit (204), die konfiguriert ist, um den Schweißparameter als Lerndaten zu verwenden und eine Lernverarbeitung gemäß einem zweiten Lernalgorithmus durchzuführen, der kontinuierliche Werte ausgibt, wodurch ein zweites trainiertes Modell erzeugt wird, das den Schweißparameter als Eingabedaten verwendet und einen Parameter ausgibt, der die Größe des durch den Schweißparameter verursachten Fehlers angibt, wobei
    der von dem ersten trainierten Modell ausgegebene Parameter und der von dem zweiten trainierten Modell ausgegebene Parameter in ein beliebiges der Parameterformate konvertierbar sind, wobei
    der vom ersten trainierten Modell ausgegebene diskrete Wert eine einer Vielzahl von Klassifizierungen ist; und
    eine Klassifizierung, bei der es sich um den von der ersten Vorhersageeinheit vorhergesagten Parameter handelt, in einen Wert umgewandelt wird, der eine für die Klassifizierung im Voraus definierte Größe eines Fehlers angibt, und den umgewandelten Wert mit dem von der zweiten Vorhersageeinheit vorhergesagten Parameter kombiniert.

3. Verfahren zur Vorhersage eines beim Schweißen auftretenden Fehlers, wobei das Verfahren zur Vorhersage eines Fehlers folgende Schritte umfasst:

    einen ersten Vorhersageschritt zum Vorhersagen des Fehlers unter Verwendung eines ersten trainierten Modells, das einen Schweißparameter empfängt und einen Parameter ausgibt, der eine Größe des Fehlers angibt;
    wobei das Verfahren durch folgende Schritte gekennzeichnet ist:

    einen zweiten Vorhersageschritt zum Vorhersagen des Fehlers unter Verwendung eines zweiten trainierten Modells, das den Schweißparameter empfängt und einen Parameter ausgibt, der eine Größe des Fehlers angibt; und
einen dritten Vorhersageschritt zum Vorhersagen der Größe des Fehlers auf der Grundlage eines im ersten Vorhersageschritt vorhergesagten Parameters und eines im zweiten Vorhersageschritt vorhergesagten Parameters,
und weiterhin **dadurch gekennzeichnet ist, dass**:

das erste trainierte Modell unter Verwendung eines ersten Lernalgorithmus erzeugt wird, der diskrete Werte ausgibt;
das zweite trainierte Modell unter Verwendung eines zweiten Lernalgorithmus erzeugt wird, der kontinuierliche Werte ausgibt;
der vom ersten trainierten Modell ausgegebene diskrete Wert eine einer Vielzahl von Klassifizierungen ist; und
der dritte Vorhersageschritt eine Klassifizierung, die der durch den ersten Vorhersageschritt vorhergesagte Parameter ist, in einen Wert umwandelt, der eine für die Klassifizierung im Voraus definierte Größe eines Fehlers angibt, und den umgewandelten Wert mit dem durch den zweiten Vorhersageschritt vorhergesagten Parameter kombiniert.

**4.** Programm, das einen Computer veranlasst, Folgendes auszuführen:

einen ersten Vorhersageschritt zum Vorhersagen eines beim Schweißen auftretenden Fehlers unter Verwendung eines ersten trainierten Modells, das einen Schweißparameter empfängt und einen Parameter ausgibt, der eine Größe des Fehlers angibt;
wobei das Programm durch die folgenden Schritte gekennzeichnet ist:

einen zweiten Vorhersageschritt zum Vorhersagen des Fehlers unter Verwendung eines zweiten trainierten Modells, das den Schweißparameter empfängt und einen Parameter ausgibt, der eine Größe des Fehlers angibt; und
einen dritten Vorhersageschritt zum Vorhersagen der Größe des Fehlers auf der Grundlage eines im ersten Vorhersageschritt vorhergesagten Parameters und eines im zweiten Vorhersageschritt vorhergesagten Parameters, **dadurch gekennzeichnet, dass**
das erste trainierte Modell unter Verwendung eines ersten Lernalgorithmus erzeugt wird, der diskrete Werte ausgibt;
das zweite trainierte Modell unter Verwendung eines zweiten Lernalgorithmus erzeugt wird, der kontinuierliche Werte ausgibt;
der vom ersten trainierten Modell ausgegebene diskrete Wert eine einer Vielzahl von Klassifizierungen ist; und
der dritte Vorhersageschritt eine Klassifizierung, die der vom ersten Vorhersageschritt vorhergesagte Parameter ist, in einen Wert umwandelt, der eine für die Klassifizierung im Voraus definierte Größe eines Fehlers angibt, und den umgewandelten Wert mit dem vom zweiten Vorhersageschritt vorhergesagten Parameter kombiniert.

## Revendications

**1.** Système de prédiction de défaut (100) pour prédire un défaut survenant lors du soudage, le système de prédiction de défaut (100) comprenant :

une première unité de prédiction (205) configurée pour prédire le défaut en utilisant un premier modèle entraîné qui reçoit un paramètre de soudage et produit un paramètre indiquant une taille du défaut ;
le système (100) étant **caractérisé par**:

une deuxième unité de prédiction (206) configurée pour prédire le défaut en utilisant un deuxième modèle entraîné qui reçoit le paramètre de soudage et produit un paramètre indiquant une taille du défaut ; et
une troisième unité de prédiction configurée pour prédire la taille du défaut sur la base d'un paramètre prédit par la première unité de prédiction (205) et d'un paramètre prédit par la deuxième unité de prédiction (206),
et **caractérisé en outre en ce que** :

le premier modèle entraîné est généré en utilisant un premier algorithme d'apprentissage qui produit des valeurs discrètes ;
le deuxième modèle entraîné est généré en utilisant un deuxième algorithme d'apprentissage qui produit des valeurs continues ;
la valeur discrète produite par le premier modèle entraîné est une d'une pluralité de classifications ; et
la troisième unité de prédiction convertit une classification, qui est le paramètre prédit par la première unité de prédiction (205), en une valeur indiquant une taille d'un défaut défini au préalable pour cette classification, et combine la valeur convertie avec le paramètre prédit par la deuxième unité de prédiction (206).

2. Dispositif d'apprentissage automatique pour générer un modèle entraîné pour prédire un défaut survenant lors du soudage, le dispositif d'apprentissage automatique comprenant :

une première unité de traitement d'apprentissage (203) configurée pour utiliser un paramètre de soudage comme données d'apprentissage et effectuer un traitement d'apprentissage selon un premier algorithme d'apprentissage qui produit des valeurs discrètes, générant ainsi un premier modèle entraîné qui utilise le paramètre de soudage comme données d'entrée et produit un paramètre indiquant une taille d'un défaut causé par le paramètre de soudage ; le dispositif étant **caractérisé par** une deuxième unité de traitement d'apprentissage (204) configurée pour utiliser le paramètre de soudage comme données d'apprentissage et effectuer un traitement d'apprentissage selon un deuxième algorithme d'apprentissage qui produit des valeurs continues, générant ainsi un deuxième modèle entraîné qui utilise le paramètre de soudage comme données d'entrée et produit un paramètre indiquant la taille du défaut causé par le paramètre de soudage, dans lequel le paramètre produit par le premier modèle entraîné et le paramètre produit par le deuxième modèle entraîné sont convertibles en l'un quelconque des formats de paramètres, dans lequel :

la valeur discrète produite par le premier modèle entraîné est l'une d'une pluralité de classifications ; et une classification, qui est le paramètre prédit par la première unité de prédiction, est convertie en une valeur indiquant une taille d'un défaut définie au préalable pour la classification, et combine la valeur convertie avec le paramètre prédit par la deuxième unité de prédiction.

3. Procédé de prédiction de défaut pour prédire un défaut survenant lors du soudage, le procédé de prédiction de défaut comprenant :

une première étape de prédiction consistant à prédire le défaut en utilisant un premier modèle entraîné qui reçoit un paramètre de soudage et produit un paramètre indiquant une taille du défaut ; le procédé étant **caractérisé par** :

une deuxième étape de prédiction consistant à prédire le défaut en utilisant un deuxième modèle entraîné qui reçoit le paramètre de soudage et produit un paramètre indiquant une taille du défaut ; et une troisième étape de prédiction consistant à prédire la taille du défaut sur la base d'un paramètre prédit lors de la première étape de prédiction et d'un paramètre prédit lors de la deuxième étape de prédiction, et étant en outre **caractérisée en ce que** :

le premier modèle entraîné est généré en utilisant un premier algorithme d'apprentissage qui produit des valeurs discrètes ; le deuxième modèle entraîné est généré en utilisant un deuxième algorithme d'apprentissage qui produit des valeurs continues ; la valeur discrète produite par le premier modèle entraîné est une d'une pluralité de classifications ; et la troisième étape de prédiction convertit une classification, qui est le paramètre prédit par la première étape de prédiction, en une valeur indiquant une taille d'un défaut défini au préalable pour la classification, et combine la valeur convertie avec le paramètre prédit par la deuxième étape de prédiction.

4. Programme amenant un ordinateur à exécuter :

une première étape de prédiction consistant à prédire un défaut survenant lors du soudage en utilisant un premier modèle entraîné qui reçoit un paramètre de soudage et produit un paramètre indiquant une taille du défaut ; le programme étant **caractérisé par** :

une deuxième étape de prédiction consistant à prédire le défaut en utilisant un deuxième modèle entraîné qui reçoit le paramètre de soudage et produit un paramètre indiquant une taille du défaut ; et une troisième étape de prédiction consistant à prédire la taille du défaut sur la base d'un paramètre prédit lors de la première étape de prédiction et d'un paramètre prédit lors de la deuxième étape de prédiction, **caractérisé en ce que** :

le premier modèle entraîné est généré en utilisant un premier algorithme d'apprentissage qui produit des valeurs discrètes ;

le deuxième modèle entraîné est généré en utilisant un deuxième algorithme d'apprentissage qui produit des valeurs continues ;

la valeur discrète produite par le premier modèle entraîné est une d'une pluralité de classifications ; et

la troisième étape de prédiction convertit une classification, qui est le paramètre prédit par la première étape de prédiction, en une valeur indiquant une taille d'un défaut défini au préalable pour la classification, et combine la valeur convertie avec le paramètre prédit par la deuxième étape de prédiction.

## FIG. 1

## FIG. 2

DEFECT PREDICTION SYSTEM — 100

| | |
|---|---|
| DATA ACQUISITION UNIT — 201 | LEARNING DATA MANAGEMENT UNIT — 202 |
| FIRST LEARNING PROCESSING UNIT — 203 | SECOND LEARNING PROCESSING UNIT — 204 |
| FIRST PREDICTION UNIT — 205 | SECOND PREDICTION UNIT — 206 |
| PREDICTION RESULT SYNTHESIS UNIT — 207 | PREDICTION RESULT OUTPUT UNIT — 208 |

## FIG. 3

# FIG. 4

LEARNING DATA

DATA EXTRACTION

RANDOMLY SELECT FEATURES FOR EACH TREE

MULTI-DECISION

CLASSIFICATIONS

## FIG. 5

```
                              ( START )
                                 │
                                 ▼
                    ┌─────────────────────────┐
                    │   PERFORM PREDICTION     │
                    │   PROCESSING BASED       │──── S501
                    │   ON RANDOM FOREST       │
                    └─────────────────────────┘
                                 │
                                 ▼
                    ┌─────────────────────────┐
                    │   PERFORM PREDICTION     │
                    │   PROCESSING BASED       │──── S502
                    │   ON GAUSSIAN PROCESS    │
                    │   REGRESSION             │
                    └─────────────────────────┘
                                 │
                                 ▼
                            ◇ IS THERE                      S503
                    DEFECT BASED ON
          YES   PREDICTION RESULT ACCORDING
                    TO RANDOM
                    FOREST? ◇
                                 │ NO
                                 ▼
                            ◇ IS THERE                      S504
                    DEFECT BASED ON
          YES   PREDICTION RESULT ACCORDING
                    TO GAUSSIAN PROCESS
                    REGRESSION? ◇
                                 │ NO
   ┌──────────────────┐         ▼
   │ THERE IS DEFECT  │── S505   ┌──────────────────┐
   └──────────────────┘          │ THERE IS NO DEFECT│── S507
                                  └──────────────────┘
   ┌──────────────────────────┐          │
   │ SET AVERAGE OF PREDICTED  │          ▼
   │ VALUES ACCORDING TO RANDOM│── S506   ┌──────────────────────┐
   │ FOREST AND GAUSSIAN PROCESS│         │ SET DEFECT SIZE TO ZERO│── S508
   │ REGRESSION TO DEFECT SIZE │          └──────────────────────┘
   └──────────────────────────┘                   │
                                                   ▼
                                               ( END )
```

FIG. 6

FIG. 7

FIG. 8

EP 4 475 046 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020060462 A
- JP 2022020392 A
- CN 112365491 A
- JP 2022036454 A

**Non-patent literature cited in the description**

- A three-stage quality diagnosis platform for laser-based manufacturing processes. **P. STAVROPOU-LOS**. The international Journal of advanced manufacturing technology. Springer, 18 September 2020, vol. 110